# EUROPEAN PATENT SPECIFICATION

(11) **EP 3 703 930 B1**
(45) Date of publication and mention of the grant of the patent: **03.07.2024**
(21) Application number: 18808495.8
(22) Date of filing: 31.10.2018
(51) Int. Cl.: B29C 53/18, B29C 49/42

(54) **AN APPARATUS FOR THE CUTTING AND OPENING OF A FILM PRODUCED BY MEANS OF A BLOW FORMING PROCESS**
VORRICHTUNG ZUM SCHNEIDEN UND ÖFFNEN EINER MITTELS EINES BLASFORMVERFAHRENS HERGESTELLTEN FOLIE
APPAREIL DE COUPE ET D'OUVERTURE D'UN FILM PRODUIT AU MOYEN D'UN PROCÉDÉ DE FORMAGE PAR SOUFFLAGE

(30) Priority: 31.10.2017 IT 201700124324
(43) Date of publication of application: 09.09.2020
(73) Proprietor: MAGEL S.r.l., 70018 Rutigliano (BA) (IT)
(72) Inventor: Moccia, Maria Rita, 70042 Mola di Bari (BA) (IT); Saracino, Angela, 70018 Rutigliano (BA) (IT); Borracci, Nicola, 70018 Rutigliano (BA) (IT)
(74) Representative: Fezzardi, Antonio
(86) International application number: PCT/IB2018/058553
(87) International publication number: WO 2019/087106

(56) References cited:
- DE-A1- 3 324 978
- DE-C2- 3 324 978
- US-A- 3 574 806
- US-A- 4 682 941

## Description

The present invention relates to an innovative apparatus for cutting and opening films obtained by means of a blow forming process during the production thereof, with particular, but not exclusive, reference to films for agriculture.

The present invention is totally innovative, since, to date, no similar ones have existed, and it is also inventive, as it has been devised to definitively solve the issues directly and indirectly related to the current need for optimizing the step of cutting blown films, so as to limit the need for large diameter extruders while obtaining great width films.

Currently, blown films are produced by cutting the film that comes out of the blown bubble into two separate parts, whose width is equal to half of the overall circumference of the film coming out of the extruder. Two cuttings are usually preformed: one on each side of the film which was flattened immediately after having been sufficiently cooled down. If, for example, the average circumference of the blown bubble is two meters, two film coils may be obtained whose width is one meter each. It is therefore evident that, in order to have a two-meters wide open film coil, it is necessary to have, with said cutting technology, an extruder which creates a blown bubble with a four-meters circumference, while to have a three-meters one, the circumference produced by the extruder must be six meters wide, and so on.

As it is well understood, the fundamental disadvantage of the technique known to date is related to the cutting procedure based on the width of the elastomeric film which must be obtained, or better is linked to the impossibility of minimizing the size of the extruder based on the circumference of the blown bubble which must be obtained with the current cutting procedures.

An apparatus for cutting and automatically opening a blown film produced by means of a blow forming process according to the preamble of claim 1 is known, for example, from German Patent Application Publication No. 33 24 978 A1.

It is the object of the present invention to overcome all the disadvantages of the background art by providing a device which performs only one longitudinal cutting - instead of two - on the blown bubble exiting the extruder and which automatically opens the cut film with specific stretching means, thus making the width of the film, which is wound already completely open on the collecting coil, correspond to the overall circumference of the film produced by blowing, allowing the drastic reduction of the bulk of the extruder, as well as, advantageously, the size of the plants for the production of blown films, with respect to the width of the films which are usually produced.

Such objects have been achieved by providing a new apparatus for cutting and opening blown films during the production thereof, as better specified in the claims attached to the present description.

These objects and the consequent advantages, as well as the features of the device according to the present invention, will become more apparent from the following detailed description of a preferred solution, given by way of explanation, but not by way of limitation, with reference to the accompanying drawings, in which:
- **Figure 1** shows a bidimensional diagrammatic view of a currently known production process of a blown film, in which two cuttings are performed along side edges;
- **Figure 2** shows a bidimensional diagrammatic view of the new production process of a blown film according to the present invention;
- **Figure 3** shows a diagrammatic view of a device for cutting and opening the blown film during the production thereof, according to the present invention; in which the arrows indicated therein show the spreading stress actions on the blown film during the opening process thereof;
- **Figure 4** is a diagrammatic sectional view of the blown film upon reaching the size, in section, with a final radius R, where it is clear that a single cutting line T of the blown film itself is provided;
- **Figure 5** is a diagrammatic view of an open elastomeric sheet (i.e., a plane film 13) following the cutting of the blown film, where it is clear how, with a single cutting T, it is possible to produce a sheet with a length of about 6.28 R, i.e. equal to the entire circumference of the blown film;
- **Figures 6 to 9** diagrammatically show a variant of the film opening and stretching means of the apparatus according to the invention, given as an alternative to those shown in the preceding Figures.

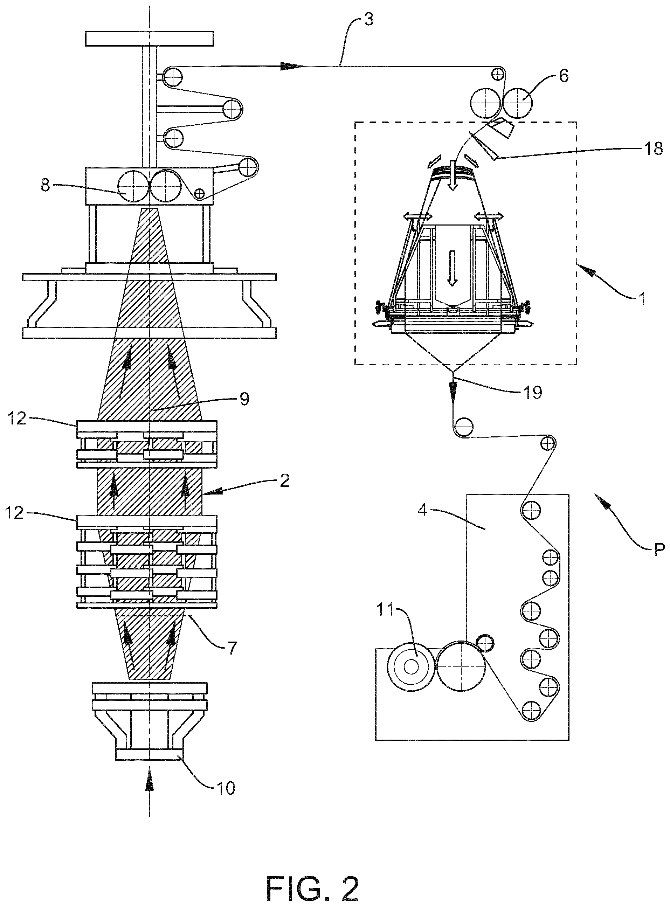

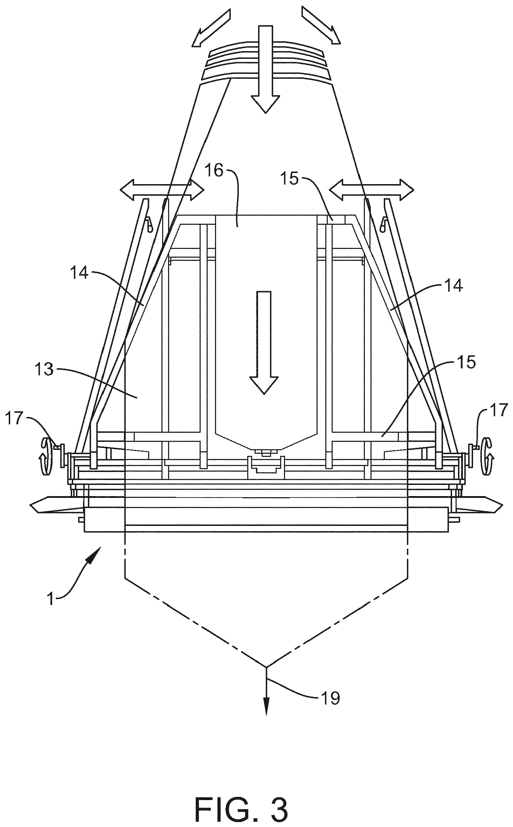

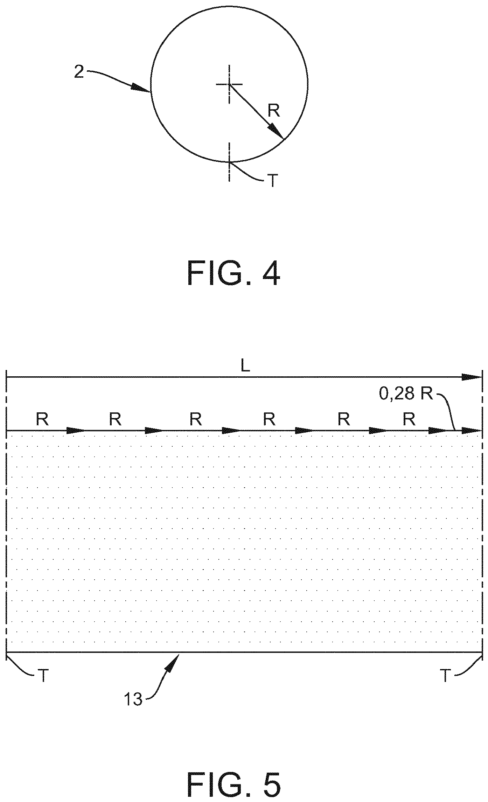

In the accompanying Figures, the simplicity of the inventive idea is clear, consisting in that the present process for forming the blown films 3and the related new procedure for the single cutting T and opening of the blown films 3during the production thereof have been devised to be easily applicable also to known processes N for the production of blown films 3, thus providing an innovative production process (Figure 2) and an inventive device for cutting and automatically opening 1 the blown film 3 (shown in a preferred, but not limitative, solution, in Figures 2 and 3, accompanying the present description), together with the related methods for cutting and opening the blown film 3 (as shown in a solution with a final radius R in Figures 4 and 5).

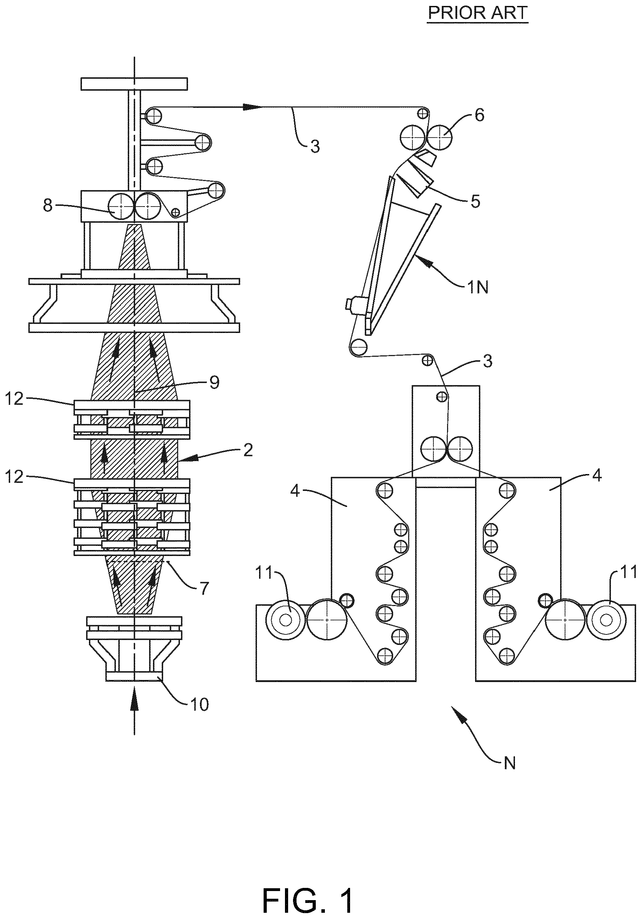

The present process for forming blown films is characterized in that it includes the use of a special automatic device 1 for cutting and opening the blown film 3 during the production thereof (Figures 2 and 3), completely innovative and inventive with respect to what has been known to date, since it achieves, with a single knife or cutting blade 18, a single longitudinal cutting T on a blown bubble 2, proceeding then to stretch and open it to the maximum extension of a plane film 13 (substantially equal to 6.28 times the final radius R obtained from the forming head 10), i.e., to bring it on a single plane (Figures 3, 4, 5), to then be capable of winding it by means of a single winder 4 on a single coil 11 (contrarily to what occurs in the background art, where the winders 4 are at least two and, therefore, two are the collecting coils 4 of the sheet obtained from the double cutting of the blown film 3, by means of a double knife 5 as shown in Figure 1).

Said single longitudinal cutting T and the related opening, cause the width of the film 3 obtained to coincide with the entire circumference of the blown bubble 2 with a final radius R, as it is easily understood by observing Figures 4 and 5.

The process is also characterized by the use of an innovative device 1 for cutting and automatically opening the blown film 3 in line, before winding it on the already completely open collecting coil, the device having been specially devised for such a purpose and being characterized by the following constructive features (Figures 2, 3, 4 and 5):
➢ at least one pair of stretching elements 14 positioned obliquely on the inside of the blown film 3 after the forming thereof, in which said means 14 are preferably, but not exclusively, provided with a plurality of small holes or micro-holes for expelling compressed air which facilitates the sliding of the film 3, reducing the sliding friction of the film itself on the stretcher;
➢ at least one pair of coaxial support means 15 positioned horizontally so that, by penetrating into each other, by means of the activation of a pair of cranks 17, they may allow varying the stretching width "L" of the blown film 3, on the basis of specific needs;
➢ means for guiding and conveying 16 the open film, which may be obtained by means of a plane metal profile or with rotatable conveying cylinders or rollers (not shown).

Said stretching means 14, 15 for stretching the film are respectively positioned obliquely and horizontally, so as to provide a shape of the automatic device 1 for opening and cutting the blown film 3 approximately in the form of a trapezium.

Said trapezium shape of the device 1 may be adjustable in width or kept in a fixed position, preferably by transforming said trapezium shape substantially in the form of a triangle, coaxially closing said horizontally positioned stretching means 15.

Said obliquely arranged stretching means 14 may preliminarily be subjected to a non-stick surface treatment, such as, for example, a Teflon coating treatment.

It should be noted that it is not indispensable that said obliquely positioned stretching means 14 emit compressed air, since they may also be equipped with one or more sleeves, coaxial to the tubes themselves, which idly rotate to allow the free sliding of the film which is opened following the longitudinal cutting, or they may simply be smooth.

It should be noted that the provision of said means for transporting and projecting compressed air as well as said rotatable external sleeves 17 is exclusively related the purpose of increasing the production speed of the plane sheet 13 to be wound on coil 11.

The apparatus 1 for cutting and automatically opening the blown film 3 is designed to be simply and easily manufactured on an industrial level, being essentially provided with a single knife or cutting blade 18, necessary for performing longitudinal cutting of the blown film 3, as well as to achieve the innovative and inventive complete opening of the blown film 3 itself in the shape of a plane sheet 13, said plane sheet 13 being completely open, easily woundable on a coil 11, by means of a conventional winder 4.

Therefore, the innovative apparatus 1 for cutting and automatically opening the blown film 3 (shown in the dashed box of Figure 2 and enlarged in Figure 3) is characterized in that it is capable performing a single longitudinal cutting T on said said film 3 and automatically and simultaneously space apart cut edges of the film 3 from each other, thereby allowing the complete opening of the film 3, configured as a plane film 13 to be obtained in the direction of the width L thereof, based, as already said, on the radius R of the annular-shape extrusion or forming head 10.

The apparatus 1 for cutting and automatically opening the blown film 3 implements a process for obtaining a completely open plane film 13 to be wound on the coil 11, which in a preferred, but not limitative, solution includes the following steps:
➢ positioning of a single knife or cutting blade 18 in a position where the cooling down and the forming of the blown film 3 have already completely occurred, the film being configured as a plane film 13;
➢ cutting of the blown film 3 along a single cutting line, to thereby perform a longitudinal cutting T on the plane film 13;
➢ complete automatic and continuous opening of the plane film 13 thus obtained, along the entire width "L" thereof, equal to the circumference of the blown film 3;
➢ conveying of the plane film 13, completely open by means of spreading 19, towards a single winder 4 on the collecting coil 11.

It is worth observing that said plane film 13, completely open and thus produced, is not perfectly smooth in the winding thereof on the collecting coil 11, since it has slight enlargements, corresponding to the folding areas of the two side edges of the cooled film 3, upon passing between the top rollers 6 before being cut and stretched until achieving complete opening thereof by means of the above described stretching device .

The fundamental advantage of the present invention when compared to the prior art is in that, following said single cutting of the plane film 13 and the complete automatic opening thereof, the latter is already completely open on the winding coil, while the prior art requires the sheet to be wound and closed, i.e., folded up on itself, with the disadvantage that the latter may be opened - manually - only when it is unrolled from the coil, thus requiring a significant increase in work by the operator for opening and laying it to protect the various crops.

Therefore, the undoubted advantage of the present invention is in that the blown film 3 is cut and opened (i.e., stretched) in an automated manner before being sent to the collecting coil, so that, on such a coil, the film is already available in the entire width thereof and may be directly unrolled and used, even by using mechanized unrolling systems.

A further advantage of the present invention consists in that the sheet thus produced is not perfectly smooth but has two longitudinal reinforcing cords at folding areas of the two side edges of the film, caused by the passage between the top dragging rolls 6 before being cut and stretched.

From the accompanying Figures, a person skilled in the art may immediately understand the advantageous manufacturing simplicity of the present system, diagrammatically shown in a preferred, but not limitative, solution in the characterizing parts thereof, in the accompanying Figures 2, 3, 4 and 5.

The further advantages of the present process and of the related procedure derive from the relative ease of manufacture and industrial implementation.

It is a further feature of the present invention that the position of the longitudinal cutting blade of the film may be adjusted manually or by means of electromechanical actuators, which may be remotely operated and controlled by an operator by means of a camera configured to locate the center of the film on which the longitudinal cutting is to be performed.

It is also evident that the embodiment described above, given by way of explanation and not by way of limitation, may be subject to numerous modifications, adaptations, additions, variations and substitutions of elements with other functionally equivalent ones, without however departing from the scope of protection of the present invention.

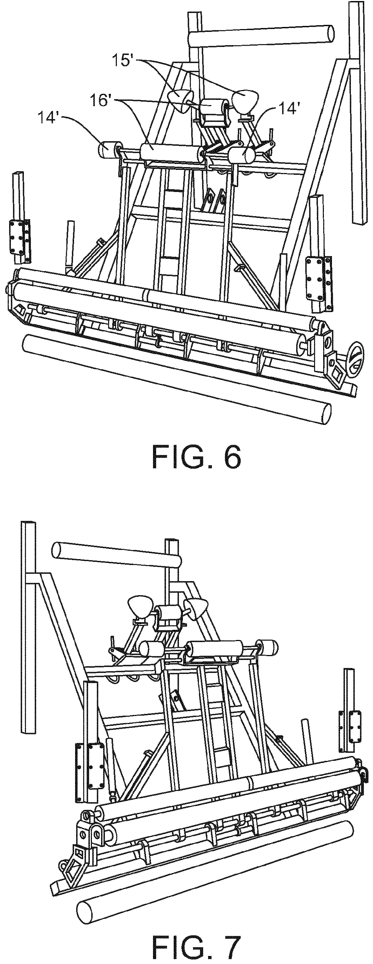

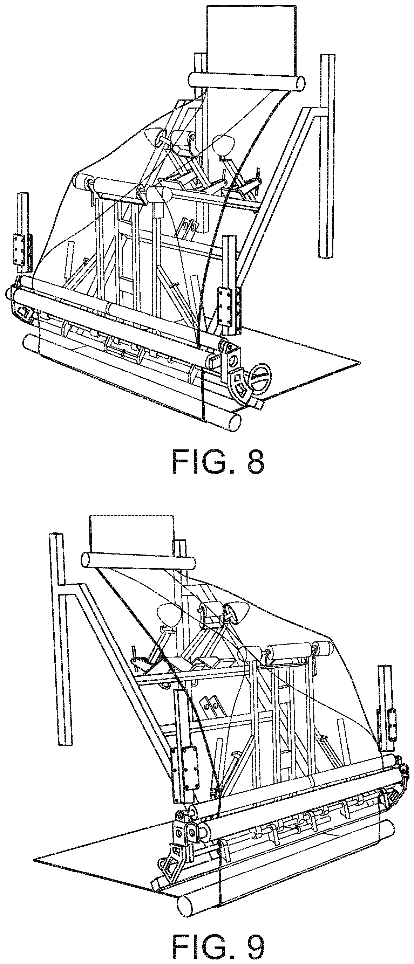

For example, a variant of the invention, shown in Figures 6 to 9, provides that said film stretching means consist of two rows of rotary shaped rollers, arranged in sequence in the motion direction of the film and transversely thereto, configured to allow the film itself to freely slide, for opening and stretching it, respectively.

In particular, said first row of film opening rollers consists of two side rollers 15', having a substantially ogive or spherical shape, and at least one cylindrical central roller 16', while said second row of stretching rollers consists of two cylindrical side rollers 14', with the external end being rounded in the form of a hemisphere, and at least one cylindrical central roller 16'.

According to the invention, the rollers of said two rows are mounted rotatably idle on respective axes thereof, so that the film may slide in contact therewith without rubbing, which may damage or tear the film during the processing.

A further peculiarity of the invention consists in that the rotation axis of said side rollers 15' and 14' may also be directed/inclined with respect to the axis of the central cylinder, according to processing needs to modify the tension applied to the film.

Finally, said two rows of rollers are also movable in the relative position with respect to each other and with respect to the film.

It may be appreciated that all the movements described up to now may be operated manually and/or motorized, in this second case, the automated management of the motorized movements being also provided.

### REFERENCE CHARACTERS

- 1.: DEVICE FOR AUTOMATICALLY CUTTING AND OPENING THE BLOWN FILM DURING THE PRODUCTION THEREOF
- 2.: BLOWN BUBBLE
- 3.: FILM
- 4.: COIL WINDER
- 5.: DOUBLE KNIFE FOR CUTTING THE BLOWN FILM IN THE KNOWN SYSTEM
- 6.: ROLLERS OR CYLINDERS FOR SPREADING THE FILM
- 7.: FREEZING LINE
- 8.: CYLINDERS FOR CONVEYING THE BLOWN FILM
- 9.: AXIS FOR SPREADING THE BLOWN BUBBLE
- 10.: ANNULAR-SHAPE EXTRUSION/FORMING HEAD
- 11.: FILM COLLECTING COIL
- 12.: COOLING GRIDS
- 13.: PLANE FILM
- 14.: OBLIQUELY POSITIONED STRETCHING MEANS
- 15.: HORIZONTALLY POSITIONED STRETCHING MEANS
- 16.: GUIDING AND CONVEYING MEANS
- 17.: CRANKS FOR ADJUSTING THE WIDTH "L" OF THE FILM BY MEANS OF THE COAXIAL SLIDING OF SAID MEANS
- 18.: SINGLE KNIFE OR CUTTING BLADE
- 19.: PULLING OF THE COMPLETELY OPEN FILM READY FOR THE FOLLOWING STEP OF WINDING ON THE COLLECTING COIL
- 14', 15', 16'.: ROTARY SHAPED ROLLERS

- L: VARIABLE WIDTH OF THE FILM BASED ON THE RADIUS OF THE EXTRUSION/FORMING HEAD
- N: KNOWN PROCESS FOR FORMING BLOWN FILM
- P: PRODUCTION PLANT
- R: FINAL RADIUS OF THE BLOWN FILM
- T: SINGLE CUTTING

## Claims

1. An apparatus (1) for the cutting and automatic opening of a blown film (3) produced by means of a blow forming process, preferably by means of an extruder (4) having an annular-shape extrusion head (10), and a plurality of rollers or cylinders (8, 6) for spreading a blown bubble (2),
wherein said apparatus (1) includes a single knife or cutting blade (18) to perform a single longitudinal cutting (T) for the opening of a cooled down blown film (3),
wherein said apparatus (1) further comprises stretching means installed in line and comprising at least one pair of transport and opening means (14, 14', 15, 15'), as well as guiding and conveying means (16, 16'), for the open film (3) obtained by virtue of said single longitudinal cutting (T) of the film (3),
wherein said stretching means (14, 14', 15, 15', 16, 16') are positioned downstream of said single knife or cutting blade (18) and are respectively arranged obliquely, horizontally and vertically on an inside of said film (3) to stretch and open it automatically following the longitudinal cutting; for such a purpose, said stretching means (14, 14', 15, 15', 16, 16') being adapted to space apart two cut edges of the film (3) to arrange the latter completely open on a single plane over the entire width (L),
**characterized in that**
said obliquely positioned stretching means (14) consist of a pair of tubes (14) and said horizontally positioned stretching means (15) consist of a pair of tubes (15), each of said obliquely positioned stretching means (14) being rigidly bound to a respective one of said horizontally positioned stretching means (15), and
said horizontally positioned tubes (15) consist of a pair of coaxial tubes, mutually slidable internally to each other, preferably by means of the manual activation of a pair of cranks (17), or
said film stretching means consist of two rows of rotary shaped rollers, arranged in sequence in the motion direction of the film (3) and transversely thereto, configured to allow the film (3) itself to freely slide, for opening and stretching it, respectively.

2. The apparatus (1) according to claim 1, **characterized in that** the stretching means, defined by said obliquely positioned and horizontally positioned tubes (14, 15), has a structure that is geometrically variable from a first trapezoidal shape to a triangular shape, by means of coaxial sliding of said horizontally positioned tubes (15).

3. The apparatus (1) according to claim 1 or 2, **characterized in that** said apparatus (1) for cutting and opening blown films is equipped with means for performing a single cutting of the blown film (3) along a longitudinal line, providing a plane film (13) having a width (L) corresponding to the circumference radius (R) of the blown film (3).

4. The apparatus (1) according to claim 1, **characterized in that** said stretching means (14, 15, 16) are provided with micro-holes adapted to expel compressed air to facilitate the cooling down and the sliding of the plane film (13), in the case of a high production speed of said film (3) on which a single longitudinal cutting (T) is performed; wherein said plane film (13) has a width (L) equal to the circumference of the film produced by blowing and cooled down before the longitudinal cutting (T) is performed.

5. The apparatus (1) according to claim 1, **characterized in that** the position of the single knife or longitudinal cutting blade (18) is adjustable manually or by means of electromechanical actuators, which may be remotely operated and controlled by an operator by means of a camera configured to locate the center of the film (3) on which the longitudinal cutting (T) is to be performed.

6. The apparatus (1) according to claim 1, **characterized in that** said first row of film opening rollers consists of two side rollers (15'), having a substantially ogive or spherical shape, and at least one cylindrical central roller (16'), while said second row of stretching rollers consists of two cylindrical side rollers (14'), with the external end being rounded in the form of a hemisphere, and at least one cylindrical central roller (16').

7. The apparatus (1) according to the preceding claim, **characterized in that** the rollers of said two rows are mounted rotatably idle on the respective axes thereof, so that the film may slide in contact therewith without rubbing, which may damage or tear the film during the processing.

8. The apparatus (1) according to claims 6 or 7, **characterized in that** the rotation axis of said side rollers (15', 14') may be directed/inclined with respect to the axis of the central cylinder (16'), according to processing needs, to modify the tension applied to the film.

9. The apparatus (1) according to one or more of claims 6 to 8, **characterized in that** said two rows of rollers are also movable in the position thereof, with respect to each other and with respect to the film.

10. The apparatus (1) according to one or more of the preceding claims, **characterized in that** all the movements of the movable parts may be operated manually and/or motorized, in this second case, the automated management of the motorized movements being also provided.

11. A cutting and opening procedure for a film (3) produced by blowing with a specific production plant (P), said plant (P) including an apparatus (1) for the cutting and automatic opening of a blown film according to one or more of the preceding claims, said procedure including the following steps of:
positioning of a single knife or longitudinal cutting blade (18) for cutting the film (3) in a predefined cutting point wherein the film (3) has been sufficiently cooled down;
cutting of the film (3) along a single longitudinal cutting line, so as to obtain a longitudinal cutting (T);
stretching and complete automatic opening of a plane film (13) over the entire width (L) thereof and winding of the plane film (13) on a collecting coil (11).

## Patentansprüche

1. Vorrichtung (1) zum Schneiden und automatischen Öffnen einer Blasfolie (3), die durch einen Blasbildungsvorgang, bevorzugt durch einen Extruder (4) hergestellt wird, der einen ringförmigen Extrusionskopf (10) und eine Mehrzahl von Walzen oder Zylindern (8, 6) zum Ausbreiten einer geblasenen Blase (2) aufweist,
wobei die Vorrichtung (1) ein einzelnes Messer oder eine Schneideklinge (18) umfasst zum Ausführen eines einzigen Längsschnitts (T) zum Öffnen einer abgekühlten Blasfolie (3),
wobei die Vorrichtung (1) ferner Streckmittel umfasst, die in einer Linie installiert sind und mindestens ein Paar Transport- und Öffnungsmittel (14, 14', 15, 15') sowie Führungs- und Fördermittel (16, 16') für die offene Folie (3) umfassen, die durch das einzige Längsschneiden (T) der Folie (3) erhalten worden ist,
wobei die Streckmittel (14, 14', 15, 15', 16, 16') stromabwärts von dem einzigen Messer oder der einzigen Schneideklinge (18) positioniert sind und jeweils schräg, horizontal und vertikal auf einer Innenseite der Folie (3) angeordnet sind zum Strecken und Öffnen derselben automatisch auf das Längsschneiden hin; wobei zu einem derartigen Zweck die Streckmittel (14, 14', 15, 15', 16, 16') geeignet ist, zwei Schneidekanten der Folie (3) zu beabstanden, um Letztere vollständig auf einer einzigen Ebene über der gesamten Breite (L) anzuordnen,
**dadurch gekennzeichnet, dass**
das schräg positionierte Streckmittel (14) aus einem Paar Röhren (14) besteht und das horizontal positionierte Streckmittel (15) aus einem Paar Röhren (15) besteht, wobei jedes des schräg positionierten Streckmittels (14) steif an jeweiliges eines des horizontal positionierten Streckmittels (15) gebunden ist und
die horizontal positionierten Röhren (15) aus einem Paar koaxialer Röhren bestehen, die gegenseitig intern zueinander bevorzugt durch das manuelle Aktivieren eines Paars von Kurbeln (17) gleitbar sind oder
das Folienstreckmittel aus zwei Reihen von rotierend gestalteten Walzen besteht, die der Reihe nach in der Bewegungsrichtung der Folie (3) und diagonal dazu angeordnet sind, zum Gestatten konfiguriert, dass die Folie (3) selbst zum Öffnen und Strecken derselben frei gleitet.

2. Vorrichtung (1) nach Anspruch 1, **dadurch gekennzeichnet, dass** das Streckmittel, das durch die schräg positionierten und horizontal positionierten Röhren (14, 15) definiert ist, eine Struktur aufweist, die geometrisch variabel von einer ersten trapezförmigen Gestalt zu einer dreieckigen Gestalt durch koaxiales Gleiten der horizontal positionierten Röhren (15) ist.

3. Vorrichtung (1) nach Anspruch 1 oder 2, **dadurch gekennzeichnet, dass** die Vorrichtung (1) zum Schneiden und Öffnen geblasener Folien mit Mitteln zum Ausführen eines einzigen Schnitts der geblasenen Folie (3) einer Längslinie entlang ausgestattet ist, wodurch eine ebene Folie (13) bereitgestellt wird, die eine Breite (L) aufweist, die dem zirkumferentiellen Radius (R) der geblasenen Folie (3) entspricht.

4. Vorrichtung (1) nach Anspruch 1, **dadurch gekennzeichnet, dass** die Streckmittel (14, 15, 16) mit Mikrolöchern ausgestattet sind, die geeignet sind, Druckluft auszustoßen, um das Herunterkühlen und das Gleiten der flachen Folie (13) in dem Fall einer hohen Herstellungsgeschwindigkeit der flachen Folie (3) zu ermöglichen, auf der ein einzelner Längsschnitt (T) ausgeführt wird; wobei die flache Folie (13) eine Breite (L) aufweist, die gleich dem Umfang der Folie ist, die durch Blasen und Herunterkühlen hergestellt wird, bevor der Längsschnitt (T) ausgeführt wird.

5. Vorrichtung (1) nach Anspruch 1, **dadurch gekennzeichnet, dass** die Position des einzelnen Messers oder der Längsschneideklinge (18) manuell oder durch elektrochemische Auslöser einstellbar ist, die ferngesteuert und durch einen Bediener mittels einer Kamera kontrolliert werden können, die konfiguriert ist, die Mitte der Folie (3) zu positionieren, auf der der Längsschnitt (T) ausgeführt werden soll.

6. Vorrichtung (1) nach Anspruch 1, **dadurch gekennzeichnet, dass** die erste Reihe von Folienöffnungswalzen aus zwei Seitenwalzen (15'), die eine im Wesentlichen Summenpolygon- oder kugelförmige Form aufweisen, und mindestens eine zylindrische mittlere Walze (16') besteht, während die zweite Reihe von Streckwalzen aus zwei zylindrischen Seitenwalzen (14'), wobei das äußere Ende in Form einer Halbkugel abgerundet ist, und mindestens einer zylindrischen mittleren Walze (16') besteht.

7. Vorrichtung (1) nach dem vorhergehenden Anspruch, **dadurch gekennzeichnet, dass** die Walzen der beiden Reihen rotierbar leerlaufend auf den jeweiligen Achsen davon montiert sind, derart, dass die Folie in Kontakt damit ohne Reiben gleiten kann, was die Folie während des Verarbeitens beschädigen oder zerreißen kann.

8. Vorrichtung (1) nach Anspruch 6 oder 7, **dadurch gekennzeichnet, dass** die Rotationsachse der Seitenwalzen (15', 14') mit Bezug auf die Achse des mittleren Zylinders (16') den Verarbeitungserfordernissen entsprechend zum Modifizieren der auf die Folie aufgebrachten Spannung gerichtet/geneigt sein kann.

9. Vorrichtung (1) nach einem oder mehreren der Ansprüche 6 bis 8, **dadurch gekennzeichnet, dass** die beiden Reihen von Walzen auch in der Position davon mit Bezug aufeinander und mit Bezug auf die Folie bewegbar sind.

10. Vorrichtung (1) nach einem oder mehreren der vorhergehenden Ansprüche, **dadurch gekennzeichnet**, das alle der Bewegungen der beweglichen Teile von Hand und/oder motorisch, in diesem zweiten Fall, betätigt werden können, wobei die automatisierte Handhabung der motorisierten Bewegungen ebenfalls bereitgestellt werden.

11. Schneide- und Öffnungvorgehensweise für eine Folie (3), die durch Blasen mit einer spezifischen Herstellungsanlage (P) hergestellt wird, wobei die Anlage (P) eine Vorrichtung (1) zum Schneiden und automatischen Öffnen einer Blasfolie einem oder mehreren der vorhergehenden Ansprüche entsprechend umfasst, wobei die Vorgehensweise die folgenden Schritte umfasst:
Positionieren eines einzelnen Messers oder einer Längsschneiderklinge (18) zum Schneiden der Folie (3) an einem vordefinierten Schneidepunkt, wobei die Folie (3) ausreichend abgekühlt worden ist;
Schneiden der Folie (3) einer einzelnen Längsschneidelinie entlang, um einen Längsschnitt (T) zu erhalten;
Strecken und vollständig automatisch Öffnen einer ebenen Folie (13) über der gesamten Breite (L) davon und Wickeln der flachen Folie (13) auf einer Sammelspule (11).

## Revendications

1. Appareil (1) pour la découpe et l'ouverture automatique d'un film (3) soufflé produit au moyen d'un processus de formage par soufflage, de préférence au moyen d'une extrudeuse (4) ayant une tête d'extrusion de forme annulaire (10), et une pluralité de rouleaux ou cylindres (8, 6) permettant d'étaler une bulle soufflée (2),
dans lequel ledit appareil (1) comporte un couteau ou une lame de coupe unique (18) pour réaliser une découpe longitudinale unique (T) pour l'ouverture d'un film (3) soufflé refroidi,
dans lequel ledit appareil (1) comprend en outre des moyens d'étirage installés en ligne et comprenant au moins une paire de moyens de transport et d'ouverture (14, 14', 15, 15'), ainsi que des moyens de guidage et de transport (16, 16'), pour le film (3) ouvert obtenu en vertu de ladite découpe longitudinale unique (T) du film (3),
dans lequel lesdits moyens d'étirage (14, 14', 15, 15', 16, 16') sont positionnés en aval dudit couteau ou de ladite lame de coupe unique (18) et sont respectivement agencés obliquement, horizontalement et verticalement sur un intérieur dudit film (3) pour étirer et ouvrir celui-ci automatiquement suivant la découpe longitudinale ; dans un tel but, lesdits moyens d'étirage (14, 14', 15, 15', 16, 16') étant conçus pour espacer deux bords de coupe du film (3) pour agencer ces derniers complètement ouverts sur un plan unique sur toute la largeur (L),
**caractérisé en ce que**
lesdits moyens d'étirage positionnés obliquement (14) consistent en une paire de tubes (14) et lesdits moyens d'étirage positionnés horizontalement (15) consistent en une paire de tubes (15), chacun desdits moyens d'étirage positionnés obliquement (14) étant lié de façon rigide à un moyen d'étirage positionné horizontalement respectif desdits moyens d'étirage positionnés horizontalement (15), et
lesdits tubes positionnés horizontalement (15) consistent en une paire de tubes coaxiaux, mutuellement coulissants en interne l'un vers l'autre, de préférence au moyen de l'activation manuelle d'une paire de manivelles (17), ou lesdits moyens d'étirage de film consistant en deux rangées de rouleaux de forme rotative, agencés en séquence dans la direction de mouvement du film (3) et transversalement à celui-ci, configurés pour permettre au film (3) lui-même de coulisser librement, pour ouvrir et étirer celui-ci, respectivement.

2. Appareil (1) selon la revendication 1, **caractérisé en ce que** les moyens d'étirage, définis par lesdits tubes positionnés obliquement et positionnés horizontalement (14, 15), ont une structure qui est géométriquement variable d'une première forme trapézoïdale à une forme triangulaire, au moyen d'un coulissement coaxial desdits tubes positionnés horizontalement (15).

3. Appareil (1) selon la revendication 1 ou 2, **caractérisé en ce que** ledit appareil (1) pour la découpe et l'ouverture de films soufflés est équipé de moyens pour réaliser une découpe unique du film (3) soufflé le long d'une ligne longitudinale, fournissant un film plan (13) présentant une largeur (L) correspondant au rayon de circonférence (R) du film (3) soufflé.

4. Appareil (1) selon la revendication 1, **caractérisé en ce que** lesdits moyens d'étirage (14, 15, 16) sont dotés de micro-trous conçus pour expulser de l'air comprimé pour faciliter le refroidissement et le coulissement du film plan (13), en cas de vitesse de production élevée dudit film (3) sur lequel une découpe longitudinale unique (T) est réalisée ; dans lequel ledit film plan (13) a une largeur (L) égale à la circonférence du film produit par soufflage et refroidissement avant que la découpe longitudinale (T) ne soit réalisée.

5. Appareil (1) selon la revendication 1, **caractérisé en ce que** la position du couteau ou de la lame de coupe longitudinale unique (18) est réglable manuellement ou au moyen d'actionneurs électromécaniques, qui peuvent être actionnés à distance et commandés par un opérateur au moyen d'une caméra configurée pour localiser le centre du film (3) sur lequel la découpe longitudinale (T) doit être réalisée.

6. Appareil (1) selon la revendication 1, **caractérisé en ce que** ladite première rangée de rouleaux d'ouverture de film consiste en deux rouleaux latéraux (15'), ayant une forme sensiblement d'ogive ou sphérique, et au moins un rouleau central cylindrique (16'), alors que ladite seconde rangée de rouleaux d'étirage est constituée de deux rouleaux latéraux cylindriques (14'), avec l'extrémité externe enroulée sous la forme d'un hémisphère, et au moins un rouleau central cylindrique (16') .

7. Appareil (1) selon la revendication précédente, **caractérisé en ce que** les rouleaux desdites deux rangées sont montés en rotation au repos sur les axes respectifs de ceux-ci, de sorte que le film puisse coulisser en contact avec ceux-ci sans frottement, qui pourrait endommager ou déchirer le film pendant le traitement.

8. Appareil (1) selon les revendications 6 ou 7, **caractérisé en ce que** l'axe de rotation desdits rouleaux latéraux (15', 14') peut être dirigé/incliné par rapport à l'axe du cylindre central (16'), selon les besoins de traitement, pour modifier la tension appliquée sur le film.

9. Appareil (1) selon une ou plusieurs des revendications 6 à 8, **caractérisé en ce que** lesdites deux rangées de rouleaux sont également mobiles dans leur position, l'une par rapport à l'autre et par rapport au film.

10. Appareil (1) selon une ou plusieurs des revendications précédentes, **caractérisé en ce que** tous les mouvements des parties mobiles peuvent être actionnés manuellement et/ou motorisés, dans ce second cas, la gestion automatisée des mouvements motorisés étant également fournie.

11. Procédure de découpe et d'ouverture pour un film (3) produit par soufflage avec une installation de production spécifique (P), ladite installation (P) comportant un appareil (1) pour la découpe et l'ouverture automatique d'un film soufflé selon une ou plusieurs des revendications précédentes, ladite procédure comportant les étapes suivantes de :
positionnement d'un couteau ou d'une lame de coupe longitudinale unique (18) pour la découpe du film (3) dans un point de coupe prédéfini dans lequel le film (3) a été suffisamment refroidi ;
découpe du film (3) le long d'une ligne de coupe longitudinale unique, de manière à obtenir une découpe longitudinale (T) ;
étirement et ouverture automatique complète d'un film plan (13) sur toute la largeur (L) de celui-ci et enroulement du film plan (13) sur une bobine de collecte (11) .
